# EUROPEAN PATENT APPLICATION

(11) **EP 4 589 358 A1**
(43) Date of publication of application: **23.07.2025**
(21) Application number: 23865697.9
(22) Date of filing: 18.07.2023
(51) Int. Cl.: G02B 21/10, G02B 21/00, G02B 21/12

(54) **BRIGHT- AND DARK-FIELD MICROSCOPE FOR BIOLOGICAL TISSUE ANALYSIS**

(30) Priority: 14.09.2022 KR 20220115525
(71) Applicant: Korea Research Institute of Standards and Science, Daejeon 34113 (KR)
(72) Inventor: KWON, Ik Hwan, Gimpo-si Gyeonggi-do 10068 (KR); LEE, Sang-Won, Sejong 30150 (KR); LEE, Tae Guel, Daejeon 34130 (KR)
(74) Representative: Mathys & Squire
(86) International application number: PCT/KR2023/010272
(87) International publication number: WO 2024/058394

(57) **Abstract**

The present disclosure relates to a bright- and dark-field microscope for biological tissue analysis. The object of the present disclosure is to provide a bright- and dark-field microscope, which can obtain both bright-field and dark-field images at the same time and, particularly, can be conveniently used for biological tissue analysis. More specifically, the object of the present disclosure is to provide a bright- and dark-field microscope for biological tissue analysis, the microscope having, as a single optical path and a reflective type, an optical system that can acquire bright-field and dark-field images and, particularly, using white light as a light source so as to even smoothly perform conventional H&E analysis in which a biological tissue is analyzed.

## Description

### [Technical Field]

The present disclosure relates to a bright- and dark-field microscope and more particularly, to a bright- and dark-field microscope that can obtain bright-field and dark-field images without an additional light source and particularly can be conveniently used for biological tissue analysis.

### [Background Art]

A microscope is an optical instrument for observing microscopic objects that are difficult to observe with the naked eye and is an instrument used in almost all fields of natural science such as biology, geology, physics, and chemistry. In general, a microscope refers to an optical microscope and basically includes an objective lens and a condenser lens. An objective lens is a lens that comes in contact with an object to be observed and serves to create a magnified image of a nearby material and a condenser lens brightly illuminates an object and contributes to enhancing the resolution of an objective lens by concentrating light onto the object. Optical microscopes are sometimes equipped with an eyepiece lens to observation with the naked eye, but they are, in some cases, equipped with a camera capable of capturing images to enable observation results to be recorded and converted into data beyond simple observation by the human eye. Meanwhile, optical microscopes typically use light in the visible spectrum, whereas electron microscopes use electron beams as a light source to observe objects at the atomic level that are much smaller and finer than objects for optical microscopes.

Meanwhile, in the process of microscopes being designed in the optimal way to observe an object in accordance with the characteristics of the object, the types of microscopes have also become more diverse. For example, in the case of objects such as biological samples with a thickness of 20µm or less, light in the visible wavelength range can easily penetrate the objects. Accordingly, a transmission microscope, which observes an object as an image that is obtained by passing incident light through the object with a light source and a condenser lens under the object, is widely used. On the other hand, in the case of objects such as minerals containing metal elements, it is difficult to use a transmission microscope because they have low transparency to visible light. On the other hand, since strong reflected and scattered light tends to be exhibited due to metal elements, a reflection microscope, which observes an object as an image that is obtained by reflecting light emitted from a light source off the object, is widely used.

A microscope is also classified into bright-field microscopes and dark-field microscopes, depending on the type of illumination. A bright-field microscope is a relative term for a dark-field microscope and substantially refers to most microscopes that obtain a field of view through projection illumination obtained by a standard vertical illuminator. A dark-field microscope is used to observe objects that are difficult to observe with a common bright-field microscope, such as microcracks or fine inclusions, and uses a special type of dark-field illumination different from that in bright-field microscope. Dark-field illumination is generally formed in a ring shape and uses plain light, that is, light that is illuminated squarely at an angle between the side and the front of an object rather than directly illuminating an object, so there is an effect that the light in the outer boundary region of the object appears with contrast. Accordingly, when observing using dark-field illumination, it becomes possible to obtain an image in which the shape of an object such as microcracks and fine inclusions as described above can be more clearly identified.

Therefore, there are a wide variety of microscopes available for optimal observation depending on the characteristics of objects. However, recently there has been a strong trend of various technological fields merging and advancing, there are increasing cases where it is required to observe an object in various ways. For example, in the related art, transmission bright-field microscopes using the H&E staining technique were widely known and used as an optimal method for observing biological tissues, but when it is required to observe metal particles in biological tissues, it may become necessary to use reflection microscopes or dark-field microscopes.

As a specific example, there are cases in which both bright- and dark-field images need to be obtained for any one object. In general, since dark-field microscopes were typically formed as a transmission type in the related art, a method of obtaining both field images by obtaining first a bright-field image using a transmission bright-field microscope, and then, replacing the illumination of the microscope with dark-field illumination (which can be achieved by replacing a condenser lens in front of a light source) and obtaining a dark-field image was used. However, this method has several problems such as reduced user convenience and increased time consumption due to the need to replace a condenser lens, and the potential for a problem like a change of the position of an object due to accidental handling during the replacement process. A microscope configuration for obtaining both bright-field and dark-field images of one object has been disclosed in Korean Patent No. 1785039 ("Dark field microscope with partial dark field module"), Japanese Patent Application Publication No. 2011-028108 ("Microscope, transmission dark-field illumination device"), etc. Similar problems such as inconvenience of part replacement and the risk of movement of an object occur in these technologies as well, as described above.

### [Prior Art Document]

(Patent Document 1) Korean Patent No. 1785039 ("Dark field microscope with partial dark field module")
(Patent Document 2) Japanese Patent Application Publication No. 2011-028108 ("Microscope, transmission dark-field illumination device")

### [Disclosure]

### [Technical Problem]

An object of the present disclosure is to provide a bright- and dark-field microscope that can obtain both bright-field and dark-field images at once and particularly can be conveniently used for biological tissue analysis. In more detail, an object of the present disclosure is to provide a bright- and dark-field microscope for biological tissue analysis that incorporates an optical system capable of obtaining both bright-field and dark-field images in a single optical path and in a reflective type, and that enables smooth execution of even H&E analysis for analyzing biological tissues by specifically using white light as a light source in the related art.

### [Technical Solution]

In one general aspect, a bright- and dark-field microscope (100) of the present disclosure includes: a light source (110); a collimator (120) making light emitted from the light source (110) into parallel light; a ring-forming optical system (130) making light coming from the collimator (120) into a ring shape; a through-hole mirror (140) reflecting light coming from the ring-forming optical system (130) to an object (500) and passing light reflecting and coming from the object (500) through a through-hole (145) formed at a center; a reflective objective lens (150) aligning a focus of light reflecting from the through-hole mirror (140) toward the object (500) on the object (500); a white reflecting plate (160) reflecting and scattering light and detachably provided behind the object (500); and a camera (190) obtaining an image by collecting light reflecting from the object (500) and passing through the through-hole (145).

In the bright- and dark-field microscope (100), when the white scattering plate (160) is disposed behind the object (500), light reflecting and scattering from the white scattering plate (160) passes through the object (500) and is collected at the camera (190), whereby a bright-field image of the object (500) may be obtained; and when the white scattering plate (160) is removed from behind the object (500), light reflecting and scattering from the object (500) is collected at the camera (190), whereby a dark-field image of the object (500) may be obtained.

The light source (110) may emit white light.

The ring-forming optical system (130) may include: a first condenser lens (131) focusing light coming from the collimator (120); a ring filter (134) making light focused at the first condenser lens (131) into ring-shaped light; a collimating lens (135) collimating light coming from the ring filter (134); and a second condenser lens (136) focusing and sending light coming from the collimating lens (135) to the through-hole mirror (140).

The ring filter (134) may make light into a ring shape by passing the light through a mask with a ring-shaped empty space.

The ring-forming optical system (130) may further include: a first aperture (132) adjusting an outermost size of the light focused at the first condenser lens (131); and a second aperture (133) adjusting brightness of the light adjusted at the first aperture (132) and sending the light to the collimating lens (135).

The ring-forming optical system (130) may be disposed such that a focus of light coming from the first condenser lens (131) is positioned between the first aperture (132) and the second aperture (133).

The reflective objective lens (150) may be formed such that light reflecting from the through-hole mirror (140) and traveling to the object (500) passes through an edge portion of the reflective objective lens (150) and the light reflecting and coming from the object (500) passes through a center portion of the reflective objective lens (150).

The reflective objective lens (150) may be formed with the edge and center portions each as separate independent lenses.

The bright- and dark-field microscope (100) may further include: a front aperture (170) removing noise of light passing and coming through the through-hole (145); and a collecting lens (180) collecting and sending light coming from the front aperture (170) to the camera (190).

The white scattering plate (160) may be spaced a predetermined distance behind the object (500) and detachably provided.

### [Advantageous Effects]

According to the present disclosure, first, there is an advantage that is it possible to obtain both dark-field and bright-field images of any one object using a single optical path. In the tissue analysis method using Hematoxylin & Eosin (H&E) that is a staining and diagnosing method that is widely used in biological tissue analysis, such bright-field and dark-field images are both needed in many cases, and, according to the present disclosure, there is an effect that it is possible to much easily provide both bright-field and dark-field images of the same object. Further, since it is possible to obtain both of a bright-field image advantageous in biological tissue observation and a dark-field image advantageous in metal particle observation, there is an effect that it is possible to observe even metal particles exposed to biological tissues.

Meanwhile, there was a problem of difficulty in large-area analysis due to the limitation of the light emission angle when obtaining a dark-field image using dark-field illumination in the related art. However, according to the present disclosure, since a dark-field microscope is also implemented in a reflective type, there is also an effect that it is possible to analyze large areas in comparison to the related art. Further, since it is formed in a reflective type, there is also an effect of fundamentally solve the problem that observation is difficult because light cannot penetrate well excessively thick biological tissues in the transmission type of the related art.

Further, according to the present disclosure, it is possible to observe the 3-dimensional structure of biological tissues using scattering intensity caused by a density difference in a dark-field image, and accordingly, there is also an effect of enabling label-free analysis that performs analysis without staining. The staining method that is widely used in biological tissue analysis has the advantage of making it possible to easily visually identify the internal structure of tissues, etc., but has the problem of a risk of damage or loss of tissues in a staining process. In this case, this problem is fundamentally solved by performing label-free analysis using the present disclosure.

### [BRIEF DESCRIPTION OF THE DRAWINGS]

FIG. 1 is a diagram illustrating a configuration of a bright- and dark-field microscope when obtaining a bright-field image of the present disclosure.
FIG. 2 is a diagram illustrating the configuration of a bright- and dark-field microscope when obtaining a dark-field image of the present disclosure.
FIG. 3 is a diagram illustrating bright- and dark-field images of a biological tissue containing metal particles.
FIGS. 4 and 5 are diagrams illustrating large-area dark-field images.
FIG. 6 is a diagram illustrating bright- and dark-field images of a non-stained biological tissue.

### [Best Mode]

Hereafter, a bright- and dark-field microscope for biological tissue analysis that has the configuration described above in accordance with the present disclosure is described in detail with reference to the accompanying drawings.

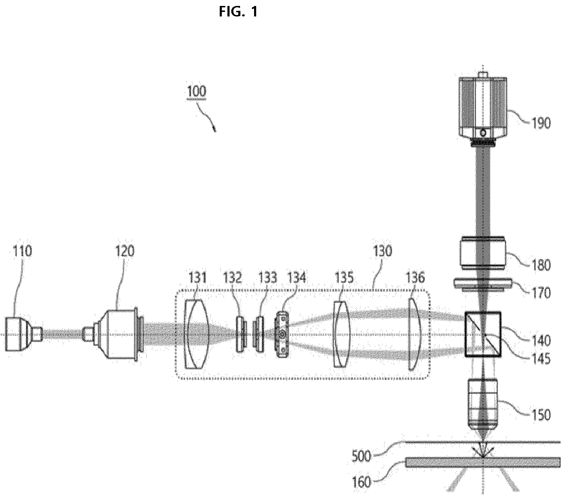

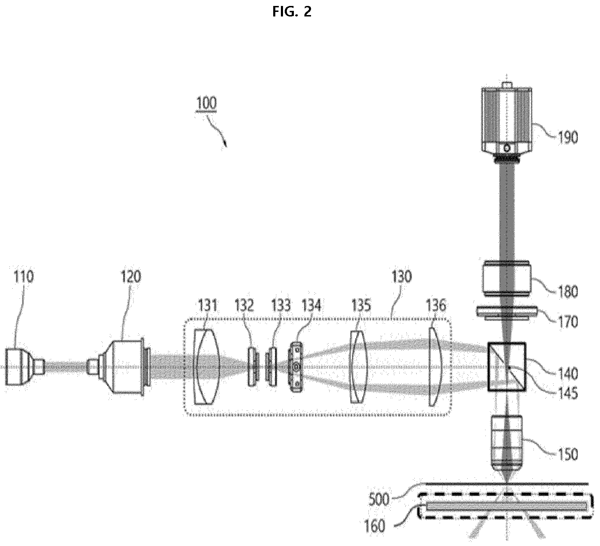

FIGS. 1 and 2 show configuration diagrams of a bright- and dark-field microscope according to an embodiment of the present disclosure, and in more detail, FIG. 1 illustrates the configuration when obtaining a bright-field image and FIG. 2 illustrates the configuration when obtaining a dark-field image. First, the configuration of a bright- and dark-field microscope 100 according to an embodiment of the present disclosure is described on the basis of FIG. 1. The bright- and dark-field microscope 100 according to an embodiment of the present disclosure includes a light source 110, a collimator 120, a ring-forming optical system 130, a through-hole mirror 140, a reflective objective lens 150, a white scattering plate 160, and a camera 190, and may further include a front aperture 170 and a collecting lens 180. Hereafter, the operation principle of the bright- and dark-field microscope 100 is described by describing the parts in detail.

Light for illuminating an object 500 is emitted from the light source 110 so that the object 500 can be easily observed. In this case, since the main purpose of the bright- and dark-field microscope 100 of the present disclosure is biological tissue analysis, the light source 110 is formed to emit white light that is usually used for biological tissue analysis.

The collimator 120 serves to make the light emitted from the light source 110 into parallel light. In this case, the collimator 120 would ideally create perfect parallel light, but in practice, even if it makes light in a highly parallel form, it is not perfect. Accordingly, in practice, the light that passes through the collimator 120 is further adjusted such as refinement by various optical parts.

The ring-forming optical system 130 serves to make the light coming from the collimator 120 into a ring shape. The most intuitive method of forming light into a ring shape may be to pass light through a mask with a ring-shaped empty space. However, as described above, since the bright- and dark-field microscope 100 of the present disclosure is for biological tissue analysis, the light source 110 is formed to emit white light. Most dark-field microscopes of the related art used laser light sources with a large coherence length. In the case of a laser light source, it is possible to know the wavelength of the laser in advance and set the wavelength within a desired range to some extent, and furthermore, when forming light into a ring shape, it is relatively easy to create uniform light with less noise using the known laser wavelength. However, since white light has a much smaller coherence length compared to laser light and all wavelengths of light are mixed therein, simply passing the white light through only a ring-shaped mask cannot create light that is uniform and stable enough for observation purposes. Accordingly, in the present disclosure, in order to make it possible to create uniform and stable ring-shaped light even though using white light, as illustrated in FIG. 1, the ring-forming optical system 130 composed of multiple optical parts is configured.

The detailed configuration of the ring-forming optical system 130 is as follows. The ring-forming optical system 130 may be configured in such a way that a first condenser lens 131, a first aperture 132, a second aperture 133, a ring filter 134, a collimating lens 135, and a second condenser lens 136 are sequentially disposed from the collimator 120 to the through-hole mirror 140. The first condenser lens 131 serves to focus the light coming from the collimator 120. Noise is removed while the focused light passes through the first aperture 132 and the second aperture 133. In more detail, the first aperture 132 mainly serves to adjust the outermost size of the light focused by the first condenser lens 131 and the second aperture 133 mainly adjust the brightness of the light adjusted by the first aperture 132. The ring filter 134 serves to form the light from the second aperture 133 into ring-shaped light, and described above, forms light into a ring shape by passing the light through a mask with a ring-shaped empty space. The collimating lens 135 serves to collimate the light coming from the ring filter 134 and the second condenser lens 136 serves to focus and send the light coming from the collimating lens 135 to the through-hole mirror 140.

As described above, when laser light with a large coherence length is used as a light source, there is little issue in producing ring-shaped light with just the ring filter 134. However, white light is used for biological tissue observation and white light has a much smaller coherence length compared to laser light, so when only the ring filter 134 is used, the light passing through the ring filter 134 contains a significant amount of noise. Accordingly, as light travels, the outer/inner edges of the ring gradually spread apart, which significantly affects the analysis result, etc. by blurring the focus when obtaining an image of the object 500. In the present disclosure, in order to maximally suppress such spreading of light, the first condenser lens 131, the collimating lens 135, and second condenser lens 136 are disposed before and after the ring filter 134, thereby refining light as much as possible.

Further, in an embodiment of the present disclosure, the first and second apertures 132 and 133 are further provided to be able to refine light through the lens system disposed before and after the ring filter 134 and to remove noise and adjust the size and brightness of light. As described above, the first aperture 132 mainly serves to adjust the size of light and the second aperture 133 mainly serves to adjust the brightness of light. In addition, in order to ensure proper functioning of the first and second apertures 132 and 133, as illustrated in FIG. 1, it is preferable to arrange the components such that the focus of the light coming from the first condenser lens 131 is formed between the first aperture 132 and the second aperture 133.

As described above, light formed in a ring shape and refined well through the ring-forming optical system 130 is emitted to the object 500, whereby an image is obtained. Hereafter, the components used for this purpose are described in the traveling direction of light.

The through-hole mirror 140 reflects light coming from the ring-shaped optical system 130 and irradiates the light to the object 500 so that an image can be obtained. A through-hole 145 is formed at the center of the through-hole mirror 140 and the light reflecting and coming from the object 500 directly passes through the through-hole 145.

The reflective objective lens 150 serves to align the focus of the light reflecting from the through-hole mirror 140 toward the object 500 on the object 500. That is, the reflective objective lens 150 is a part that directly obtains an image of the object 500. In this case, the reflective objective lens 150 is slightly different in configuration from common objective lenses. In the case of common objective lenses, the path through which light is sent to an object and the path through which the light reflecting and coming from the object passes again through the objective lenses are the same. However, in the case of the reflective objective lens 150, the light itself sent to the object 500 is formed in a ring shape, so it is different in shape from the light that is directly emitted to the object 500.

In order to correspond well to the shape of light, the reflective objective lens 150 is formed such that light reflecting from the through-hole mirror 140 and traveling to the object 500 passes through the edge portion of the reflective objective lens 150 and the light reflecting and coming from the object 500 passes through the center portion of the reflective objective lens 150. That is, the reflective objective lens 150 is formed with the edge and center portions each as separate independent lenses. Since the reflective objective lens 150 is formed in this way, first, ring-shaped light reflects from the mirror portion of the through-hole mirror 140 and passes through the edge portion of the reflective objective lens 150, thereby being smoothly emitted to the object 500. Further, the light reflecting and coming from the object 500 passes and travels through the center potion of the reflective objective lens 150, and accordingly, the light can smoothly pass through the through-hole 145 formed at the center of the through-hole mirror 140.

The camera 190 serves to obtain an image by collecting light reflecting from the object 500 and passing through the through-hole 145. In this case, in order to improve the quality of an image coming into the camera 190, a front aperture 170 that removes noise of light coming through the through-hole 145 and a collecting lens 180 that collects and sends light coming from the front aperture 170 to the camera 190 may be further provided between the through-hole mirror 140 and the camera 190.

In this case, the bright- and dark-field microscope 100 according to an embodiment of the present disclosure, as clearly illustrated in FIG. 1, includes a white scattering plate 160 that reflects and scatters light and is detachably provided behind the object 500. The white scattering plate 160, if necessary, may be disposed or removed behind the object 500, whereby the bright- and dark-field microscope 100 can obtain a bright-field image or a dark-field image of the object 500. Now, the principle of obtaining bright-field/dark-field images is described with reference to FIG. 1 and FIG. 2.

First, as illustrated in FIG. 1, when the white scattering plate 160 is disposed behind the object 500, a bright-field image is obtained. When the white scattering plate 160 is disposed behind the object 500, as indicated by an arrow between the white scattering plate 160 and the object 500 in FIG. 1, light passing through the object 500 reflects and scatters from the white scattering plate 160. When the light reflecting and scattering in this way passes back through the object 500 and is collected to the camera 190, an image formed by the light reflecting and scattering from the white scattering plate 160 in this way is obtained at the camera 190. In this case, the light reflecting and scattering from the white scattering plate 160 serves the same function as light that is directly emitted to an object in a transmission bright-field microscope. Accordingly, as illustrated in FIG. 1, when the white scattering plate 160 is disposed behind the object 500, the image obtained at the camera 190 is a bright-field image.

Next, as illustrated in FIG. 2, a portion in which the white scattering plate 160 can be disposed is indicated by a dotted line around the white scattering plate 160. When the white scattering plate 160 is removed from the portion indicated by a dotted line, the light reflecting and scattering from the object 500 is collected to the camera 190, whereby an image is obtained. To explain more clearly, the light passing through the edge portion of the reflective objective lens 150 is emitted to the object 500 and the light reflecting and scattering from the object 500 and passing through the center portion of the reflective objective lens 150 is collected to the camera 190. In this case, the light passing through the edge portion of the reflective objective lens 150 serves the same function as light that is emitted to an object by a ring-shaped dark-field light in a dark-field microscope. Accordingly, as illustrated in FIG. 2, when the white scattering plate 160 is remove from behind the object 500, the image obtained at the camera 190 is a dark-field image.

To clarify further, it can be inferred from the above description that, in the same principle as a state of FIG. 2, even in the state of FIG. 1, the dark-field image obtained by the reflective objective lens 150 is also captured at the camera 190. However, in the state of FIG. 1, since the bright-field image obtained by light reflecting and scattering from the white scattering plate 160 is also obtained, strictly speaking, an image formed by overlap of a bright-field image and a dark-field image is captured at the camera 190. However, in this case, since the bright-field image is much brighter than the dark-field image (in other words, since it is a much stronger signal), even though the bright-field image and the dark-field image overlap, there is no significant change in the bright-field image, so it can be considered as the bright-field image without any problem.

As described above, the bright- and dark-field microscope 100 according to an embodiment of the present disclosure makes it possible to easily obtain bright-field/dark-field images of the same object only on the basis of the presence or absence of the white scattering plate 160. In summary, when the white scattering plate 160 is disposed, reflected light from the white scattering plate 160 acts like illumination of a transmission bright-field microscope, whereby it is possible to obtain a bright-field image. Further, when the white scattering plate 160 is removed, light passing through the edge portion of the reflective objective lens 150 acts like illumination for a dark field, whereby it is possible to obtain a dark-field image.

Bright and dark-field microscopes of the related art are generally formed in a transmission type, and accordingly, they use a method of obtaining bright-field/dark-field images of an object while changing the bright-field/dark-field illumination, and there are inconvenience in replacement of illumination in this process and a risk of movement of an object that may occur in the replacement process, which was described above. However, the bright- and dark-field microscope of the present disclosure is fundamentally formed in a reflective type and can obtain bright-field/dark-field images through only a simple operation of disposing or removing the white scattering plate 160 behind the object 500. Further, since the white scattering plate 160 is sufficiently spaced apart from the object 500, the risk of movement or damage to the object 500 when the white scattering plate 160 is disposed/removed is also remarkably reduced. Therefore, according to the present disclosure, it is possible to much easily provide both bright-field and dark-field images of the same object.

Hereafter, the effects of the bright- and dark-field microscope 100 of the present disclosure are described in more detail through various images substantially obtained using the bright- and dark-field microscope 100 of the present disclosure.

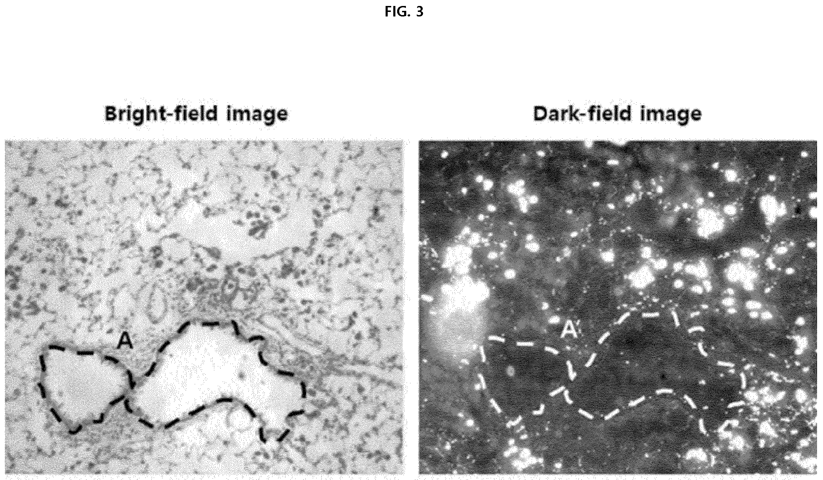

FIG. 3 illustrates bright- and dark-field images of a biological tissue containing metal particles. In more detail, FIG. 3 illustrates pictures of a mouse lung tissue containing TiO₂ particles.

As illustrated in the bright-field image at the left side, a mouse lung tissue containing TiO₂ particles that is an object is in a stained state to make it easy to visually identify the structure of the biological tissue. However, the structure of the lung tissue itself is clearly identifiable by purple lines due to staining, but TiO₂ particles that appear as dark gray dots are somewhat unclearly shown. Intuitively, it can be inferred that it would not be easy to clearly determine the status of distribution of TiO₂ particles not only by visual observation, but also through image processing.

The dark-field image at the right side is a dark-field image of the same object as the bright-field image at the left side. The fact that the image is for the same object can be confirmed from the fact that the shape of the part A shown by a black dotted line in the bright-field image at the left side and the shape of the part A' shown by a white dotted line in the dark-field image at the right side are the same.

Meanwhile, as described above, it has been described that since metal particles exhibit a very strong reflective light and scattered light signal, a dark-field image is advantageous for identifying them. As described above, TiO₂ particles appear dark gray in the bright-field image at the left side, but they appear as very bright dots (very bright white dots in the image) in the dark-field image at the right side. That is, it is confirmed that it is possible to very clearly and accurately determine the status of distribution of TiO₂ particles using a dark-field image.

As described above, according to the present disclosure, it is possible to very easily obtain a bright-field image and a dark-field image of the same object. As described above, since it is possible to obtain both of a bright-field image advantageous in biological tissue observation and a dark-field image advantageous in metal particle observation, as exemplified in FIG. 3, when metal particles are mixed in a biological tissue, the bright- and dark-field microscope of the present disclosure can be very effectively used for the work of determining the status of distribution of metal particles, etc.

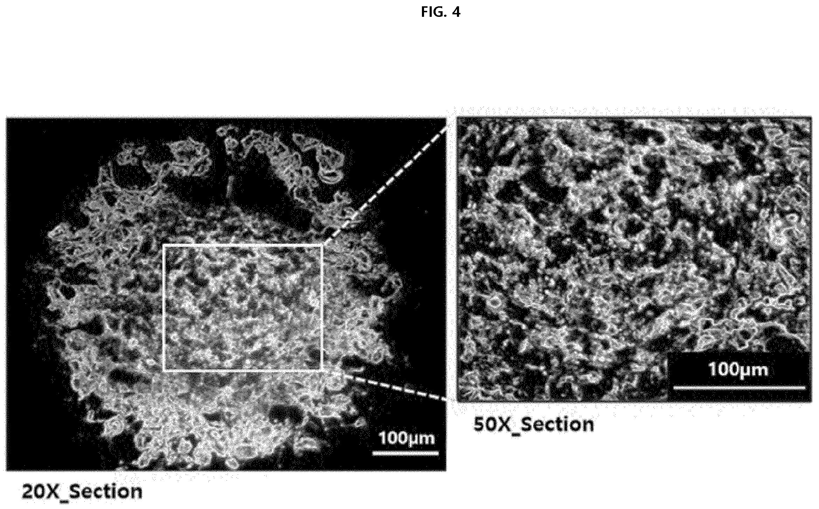

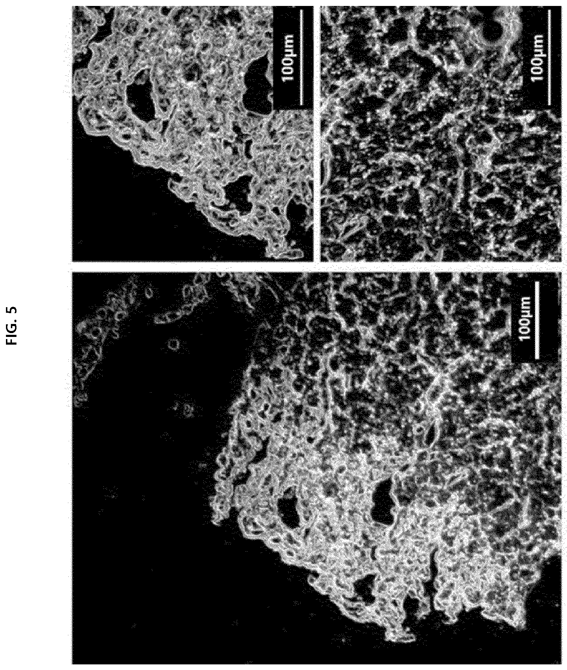

FIGS. 4 and 5 illustrate a comparison between a large-area dark-field image and a partial enlarged image of the image.

As described above, general dark-field microscopes of the related art are formed in a transmission type. That is, a dark-field light emitting ring-shaped light is disposed behind an object and a dark-field image of the object is obtained by the light emitted from the dark-field light. However, when a dark-field light is used, there has been a constant issue of difficulty in large-area analysis due to the limitation of the light emission angle.

On the contrary, a bright- and dark-field microscope is configured in a reflective type in the present disclosure. Accordingly, it is possible to overcome the limitations of the transmission-type configuration in the related art, and, as shown at the views at the left side in FIG. 4 and FIG. 5, it is possible to obtain large-area images in comparison to the related art. The views at the right side in FIG. 4 and FIG. 5 are partial enlarged images of the views at the left side, respectively, it can be intuitively seen that it is possible to sufficiently ensure considerably high resolution even though zooming in at the right side while observing in a large area at the left side.

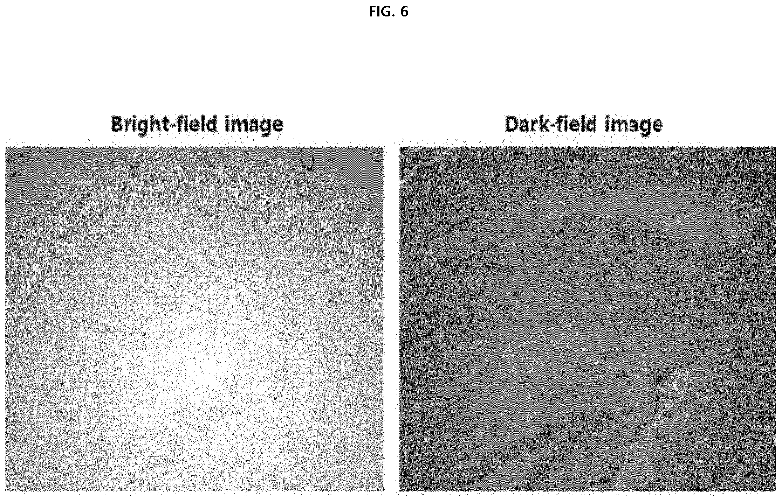

FIG. 6 illustrates bright- and dark-field images of a non-stained biological tissue. As shown above in the example of FIG. 3, staining is very common when observing biological tissues. The staining method that is widely used in biological tissue analysis has the advantage of making it possible to visually easily identify the internal structure of tissues. However, there is a problem of a risk that tissues are damaged or lost in the staining process, so the demand for label-free analysis that performs analysis without staining, is recently increasing.

The bright-field image at the left side is a bright-field image of a non-stained mouse brain tissue. As illustrated in the figure, overall, only blurry and unclear spots can be recognized, so it is almost impossible to visually identify the internal structure of the tissue.

The dark-field image at the right side is a dark-field image of the same object. As described above, a reflective light or scattered light signal appears strongly in a dark-field image. In this case, the density difference in the internal structure of the object causes a difference in scattering intensity, and this difference appears as a distinct contrast in the dark-field image. Unlike the bright-field image at the left side in which only blurry and unclear spots are recognized, it is clearly seen that the positions of large wrinkles or small structural features are very clear in the dark-field image at the right side.

As described above, according to an aspect of the present disclosure, it is possible to very easily and smoothly obtain high-quality bright-field/dark-field images of the same object, by using this, as in the example of FIG. 6, it is possible observe and analyze the internal structure of biological tissues considerably well even in a label-free type. Accordingly, the present disclosure can be a fundamental solution to the problems of damage and loss of an object due to staining.

Although exemplary embodiments of the present disclosure were described above with reference to the accompanying drawings, those skilled in the art would understand that the present disclosure may be implemented in various ways without changing the necessary features or the spirit of the prevent disclosure. Therefore, the embodiments described above are only examples and should not be construed as being limitative in all respects.

### [Description of Reference Numerals]

100: Bright- and dark-field microscope
110: Light source
120: Collimator
130: Ring-forming optical system
131: First condenser lens
132: First aperture
133: Second aperture
134: Ring filter
135: Collimating lens
136: Second condenser lens
140: Through-hole mirror
145: Through-hole
150: Reflective objective lens
160: White scattering plate
170: Front aperture
180: Collecting lens
190: Camera
500: Object

## Claims

1. A bright- and dark-field microscope comprising:
**a light source;**
**a collimator** making light emitted from the light source into parallel light;
**a ring-forming optical system** making light coming from the collimator into a ring shape;
**a through-hole mirror** reflecting light coming from the ring-forming optical system to an object and passing light reflecting and coming from the object through a through-hole formed at a center;
**a reflective objective lens** aligning a focus of light reflecting from the through-hole mirror toward the object on the object;
**a white reflecting plate** reflecting and scattering light and detachably provided behind the object; and
**a camera** obtaining an image by collecting light reflecting from the object and passing through the through-hole.

2. The bright- and dark-field microscope of claim 1, wherein when the white scattering plate is disposed behind the object, light reflecting and scattering from the white scattering plate passes through the object and is collected at the camera, whereby a bright-field image of the object is obtained; and
when the white scattering plate is removed from behind the object, light reflecting and scattering from the object is collected at the camera, whereby a dark-field image of the object is obtained.

3. The bright- and dark-field microscope of claim 1, wherein the light source emits white light.

4. The bright- and dark-field microscope of claim 3, wherein the ring-forming optical system includes:
**a first condenser lens** focusing light coming from the collimator;
**a ring filter** making light focused at the first condenser lens into ring-shaped light;
**a collimating lens** collimating light coming from the ring filter; and
**a second condenser lens** focusing and sending light coming from the collimating lens to the through-hole mirror.

5. The bright- and dark-field microscope of claim 4, wherein the ring filter makes light into a ring shape by passing the light through a mask with a ring-shaped empty space.

6. The bright- and dark-field microscope of claim 4, wherein the ring-forming optical system further includes:
a first aperture adjusting an outermost size of the light focused at the first condenser lens; and
a second aperture adjusting brightness of the light adjusted at the first aperture and sending the light to the collimating lens.

7. The bright- and dark-field microscope of claim 6, wherein the ring-forming optical system is disposed such that a focus of light coming from the first condenser lens is positioned between the first aperture and the second aperture.

8. The bright- and dark-field microscope of claim 1, wherein the reflective objective lens is provided such that light reflecting from the through-hole mirror and traveling to the object passes through an edge portion of the reflective objective lens, and
light reflecting and coming from the object passes through a center portion of the reflective objective lens.

9. The bright- and dark-field microscope of claim 8, wherein the reflective objective lens has separate independent lenses at the edge portion and the center portion, respectively.

10. The bright- and dark-field microscope of claim 1, further comprising:
a front aperture removing noise of light passing and coming through the through-hole; and
a collecting lens collecting and sending light coming from the front aperture to the camera.

11. The bright- and dark-field microscope of claim 1, wherein the white scattering plate is spaced a predetermined distance behind the object and detachably provided.
